# EUROPEAN PATENT APPLICATION

(11) **EP 1 437 532 A2**
(43) Date of publication of application: **14.07.2004**
(21) Application number: 03028510.0
(22) Date of filing: 10.12.2003
(51) Int. Cl.: F16H 61/00

(54) **Electro-hydraulic manifold assembly and pressure sensor therefor**

(30) Priority: 19.12.2002 US 325015
(71) Applicant: EATON CORPORATION, Cleveland, Ohio 44114-2584 (US)
(72) Inventor: Ford, Greg E., Redford Michigan 48239 (US); Green, Timothy J., Holly Michigan 48442-8602 (US); Herbert, David E., Rochester Hills Michigan 48309 (US); Bowman, Harold L., Lapeer Michigan 48446 (US)
(74) Representative: Wagner, Karl H., Dipl.-Ing.

(57) **Abstract**

An electro-hydraulic manifold assembly including integral pressure transducers for providing real time indication of the control pressure signal output of each electrically operated valve on the manifold. The transducer dies are adhesively attached to circuit boards and the leads ultrasonically attached to pads on the ends of conductive strips on the circuit boards. Upstanding electrical connectors are attached to the circuit boards and connected to the dies which are potted over with silicone potting compound and the circuit board attached to the manifold. An electrical lead frame commonly engages the solenoid terminals and the pressure transducer terminals in bayonet style connection through slots in the lead frame.

## Description

### BACKGROUND OF THE INVENTION

The present invention relates to a fluid pressure manifold equipped with electrically operated valves for selectively providing pressurized fluid to individual outlet ports on the manifold. Electrically valved manifold assemblies of this type are employed in motor vehicle automatic shifting speed change transmissions where the electrically operated solenoid type valves are controlled by an electronic computer for controlling the flow of pressurized fluid to the transmission shift actuators, such as band clutch actuators, employed in the transmission shifting operations. The electronically controlled solenoid operated valves provide improved shifting capabilities for the transmission and in particular, permit staged or progressive release and application of the band clutches for effecting smoother speed changes in the transmission.

Such manifold assemblies are, in current production mounted internally on the transmission valve body and supplied with pressurized fluid from a pump disposed in the transmission.

In controlling the shifting of an automatic speed change power transmission, it has been found desirable to continuously monitor the fluid pressure to the band clutch actuators and to provide such information to the electronic controller on a real time basis in order that the controller can generate control signals for the solenoid operated valves to effect the desired pressure to the shift actuator and thus provide for smoother shifting or changing of the gears.

Thus, it has been desired to provide pressure sensing devices in the manifold assembly to sense the pressure supplied by each of the electrically operated valves to the fluid pressure outlet for supplying fluid pressure to the respectively associated shift actuator. Furthermore, it has been desired to provide pressure indicators for each of the outlet ports of the respective solenoid valves on such a manifold assembly and to enable electrical connection to the valves without the need for additional wiring or wiring harness connectors and to be able to mount the manifold assembly interiorly of the transmission casing.

### BRIEF SUMMARY OF THE INVENTION

The present invention provides a simple and relatively low cost technique for fabricating pressure sensor or transducer assemblies for providing real time continuous electrical signals indicative of the pressure in sensing ports provided in an electrically valved manifold assembly. The pressure sensor assemblies of the present invention are fabricated on a circuit board and applied to a common surface of the manifold and retained thereon and electrically connected to a common lead frame provided for the solenoid operated valves and potted for protection against harsh environmental exposure. The present invention thus enables the addition of pressure sensors for real time closed loop electrical control of the solenoid valves for, as for example, controlling shifting in an automatic transmission.

The pressure sensor assembly of the present invention employs a die having a pressure sensitive region disposed over a sensing orifice formed in the circuit board. The die is secured to the board adhesively and is electrically connected to strips on the circuit board, preferably by weldment of the die leads to pads on the strips, and potting compound is applied over the die for retaining and protecting the die in service. The circuit board and pressure sensor assembly may then be attached to the manifold with the sensing orifices located over corresponding pressure sensing ports in a common face of the manifold. The circuit board has electrical connector terminals extending outwardly therefrom for engagement by a common lead frame assembled over the electrical terminals on the solenoid operated valves.

### BRIEF DESCRIPTION OF THE DRAWINGS

FIG. 1 is a perspective view of the completely assembled electro-hydraulic manifold with the pressure sensors contained therein;

FIGS. 2a and 2b are an exploded view of the assembly of FIG. 1 divided along separation line I-I;

FIG. 3 is a section view taken along section indicating line 3-3 of FIG. 1;

FIG. 4 is a section view taken along section indicating lines 4-4 of FIG. 1; and,

FIG. 5 is a plan view of the circuit board pressure sensor subassembly of the present invention.

### DETAILED DESCRIPTION OF THE INVENTION

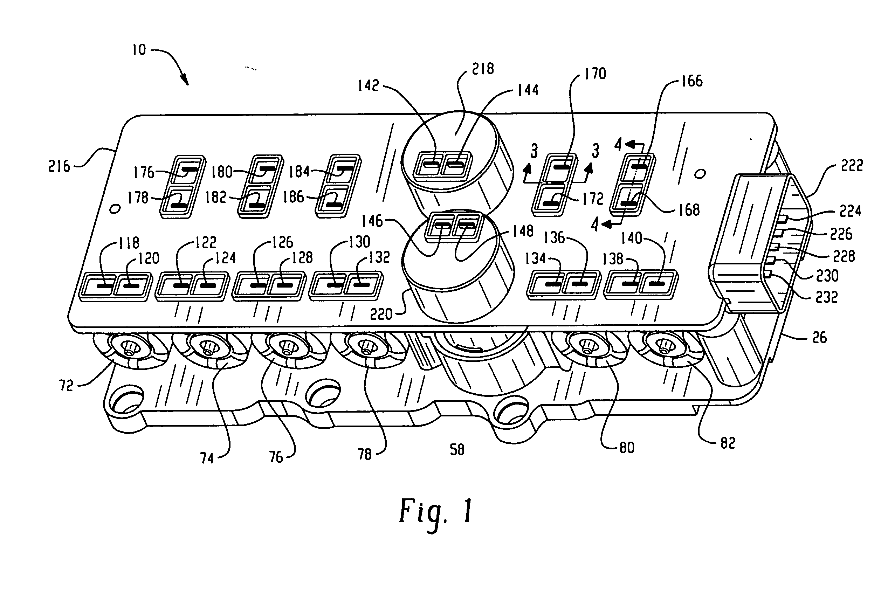

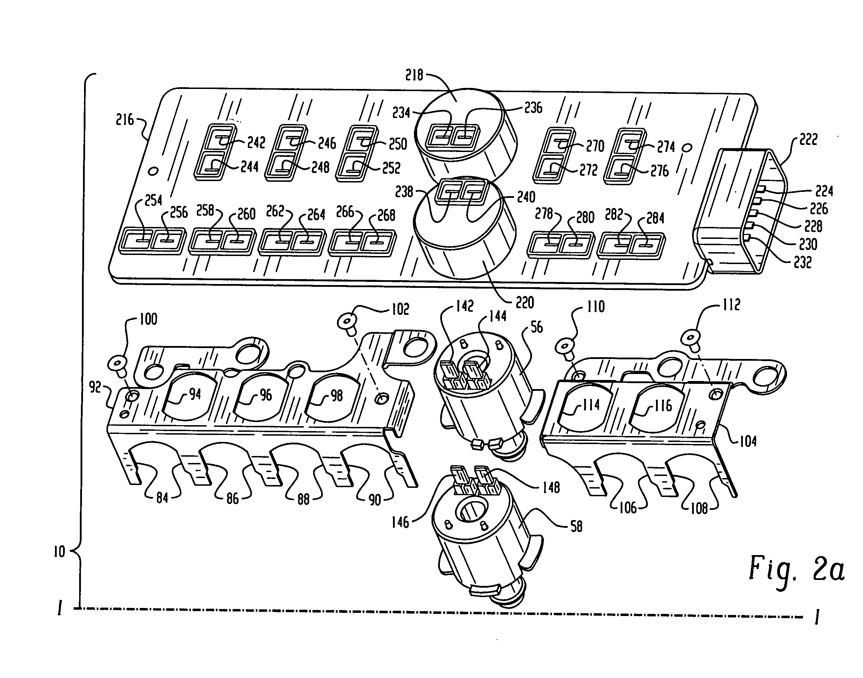

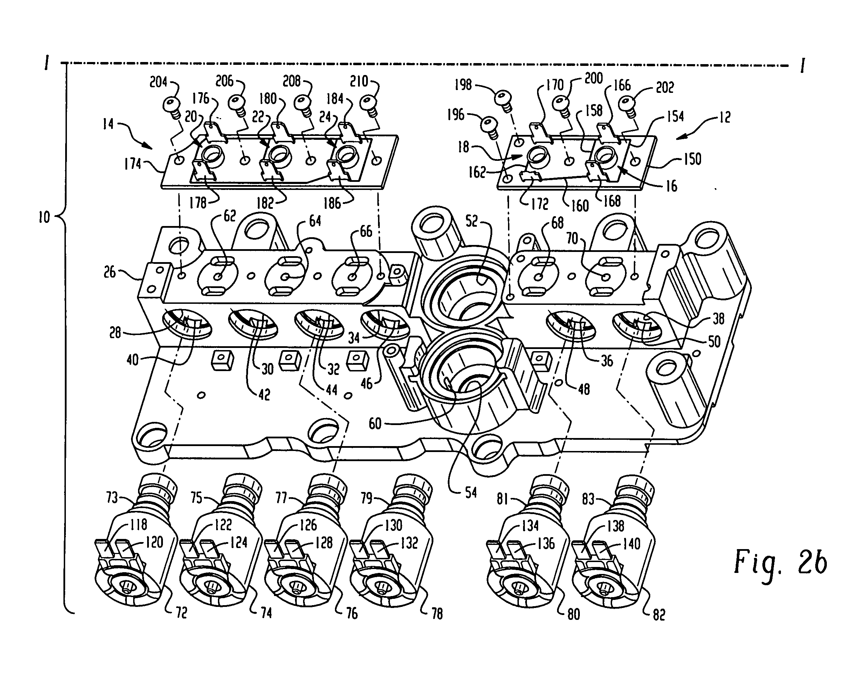

Referring to FIGS. 1, 2a and 2b, the electro-hydraulic manifold assembly is indicated generally at 10 and includes a pair of pressure sensor assemblies indicated generally at 12, 14 with the sensor assembly 12 having a pair of pressure sensors or transducers 16, 18 respectively; and, the sensor assembly 14 includes three sensors or transducers denoted 20, 22, 24 respectively.

A manifold block 26 has a plurality of cavities along one side thereof denoted by reference numerals 28 through 38 with each cavity having an outlet port denoted respectively 40 through 50 which communicates with ports (not shown) on the undersurface of manifold block 26.

Manifold block 26 further includes a pair of valving cavities 52, 54 disposed between cavities 34 and 36. The cavities 52, 54 each have a solenoid operated valve respectively 56, 58 received therein for providing valving to other outlet ports such as the port 60 shown in cavity 54 in FIG. 2b.

Manifold block 26 has a plurality of pressure sensing ports denoted respectively 62 through 70 which are disposed along the upper surface of the manifold block in spaced arrangement, with each of the ports 62 through 70 communicating with one of the valving cavities 28 through 38. Each of the valving cavities 28 through 38, has received therein a solenoid operated valve denoted respectively 72, 74, 76, 78, 80, 82 for individually controlling flow to the outlets 40 through 50 respectively. Valves 72, 74, 76, 78 are each secured in their position in the respective cavities 28 through 34 by slots 84 through 90 formed on a generally right-angle bracket 92, which slots engage annular grooves provided in the body of each of the valves 72, 74, 76 78. In FIG. 2b the grooves in the body of each of the valves 72, 74, 76, 78 are denoted by reference numerals 73, 75, 77, 79 respectively. Bracket 92 has apertures 94 through 98 formed in the horizontal surface thereof, which provide clearance for pressure sensors 20 through 24 as will be hereinafter described; and, it will be understood that bracket 92 is secured to the top surface of the manifold by suitable fasteners 100, 102.

Similarly a right angled bracket 104 has slots 106, 108 formed therein which engage annular grooves 81, 83 provided in the body of the valves 80, 82 for retaining the valves in cavities 36, 38 respectively. Bracket 104 is retained on the upper surface of manifold 26 by suitable fasteners 110, 112. Bracket 104 has apertures 114, 116 formed on the upper or horizontal surface thereof which provide clearance for the pressure sensors 16, 18 as will hereinafter be described.

Each of the valves 72, 74, 76, 78, 80, 82 has a pair of vertically upwardly extending connector terminals denoted respectively 118 through 140. Valves 56, 58 each have vertically extending connector terminals denoted respectively 142 through 148 for external connection thereto as will hereinafter be described.

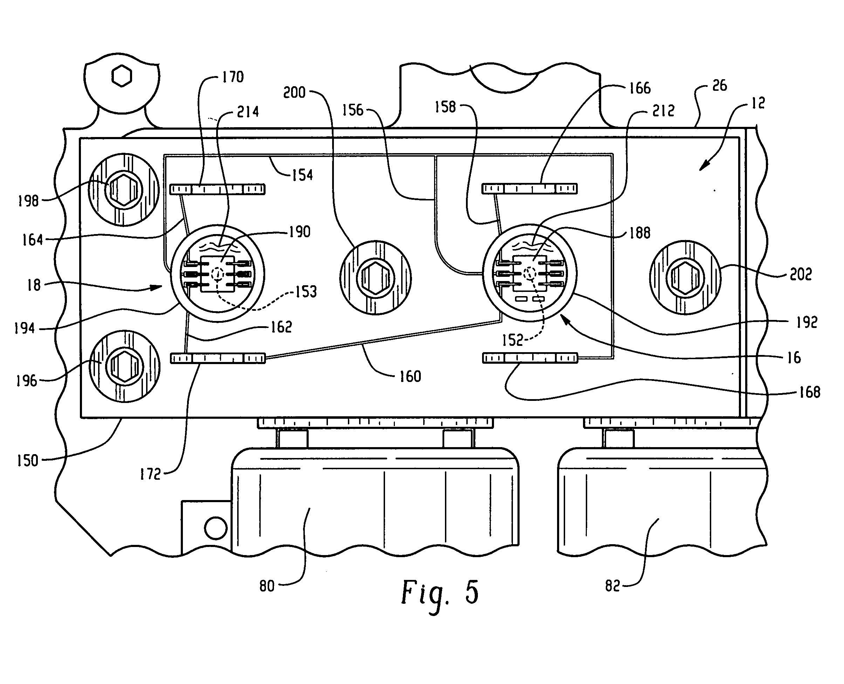

Referring to FIGS. 2b, 3, 4 and 5, the pressure sensor assembly 12 includes circuit board 150 having a sensing aperture 152 formed therein which is appropriately located on board 150 to communicate with the sensing port 70 (see FIG. 2b) in the upper surface of the manifold 26. Circuit board 150 has sensors 16, 18 thereon as shown in FIG. 5, and electrically conductive strips denoted by reference numerals 154 through 164 respectively, which strips 154, 162, 164 terminate in pads for connection to the sensor 18; and, strips 156, 158, 160 terminate in pads for connection to the sensor 16.

A pair of upstanding connector terminals 166, 168 are disposed in attachment on board 150 in spaced parallel arrangement respectively on opposite sides of the sensor 16 with conductive strip 158 connected to terminal 166 and strip 154 connected to terminal 168. Similarly, a pair of upstanding electrical connecting terminals 170, 172 are disposed in attachment on board 150 in spaced parallel arrangement respectively on opposite sides of the sensor 18 with terminal 170 connected to conductive strip 164 and terminal 172 connected to conductive strip 162.

It will be understood that the sensor 16 and the arrangement of connector terminals 166, 168 is typical of that for the sensor 18 and the sensors 20, 22, 24 mounted on a separate circuit board 174. Board 174 is positioned with sensors 20, 22, 24 positioned over the sensing ports 62, 64, 66 respectively on the manifold; and, it will be understood that the construction of the assembly for the sensor 12 described hereinafter is representative of that of the sensor assembly 14 and sensors 20, 22, 24. Circuit board 174 has a pair of upstanding connector terminals attached thereto and disposed in spaced parallel relationship on opposite sides of each of the sensors 20, 22, 24 respectively, which connector terminals are denoted respectively by reference numerals 176 through 186 in FIG. 2b.

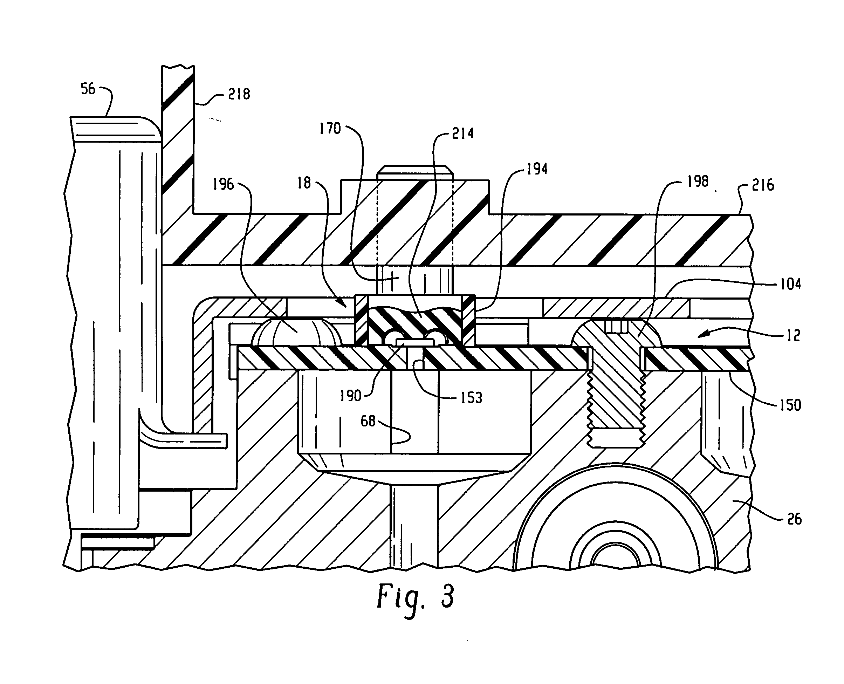

Referring to FIGS. 3, 4 and 5, sensors 16, 18 each include respectively a die 188, 190 each having a region of pressure sensitivity for varying the electrical impedance, preferably resistance, thereof and disposed respectively over the sensing orifices 152, 153 and secured thereover by suitable adhesive attachment, as for example, by use of epoxy material. In the presently preferred practice, the dies are preferably of the type commercially available from Sentir Semiconductor, Inc., Santa Clara, California and bearing manufacturer's designation APD301 Series 5000 Ohm Medium Pressure Sensor Die. However, other types of dies may be employed which are designed to sense pressures in the same range, and have similar electrical impedance properties and are sufficiently robust to operate at temperatures of up to 140°C while exposed to transmission fluid.

Each of the dies 188, 190 respectively has leads extending therefrom which are attached to the pads respectively for the conductive strips 156, 158, 160 for die 188 and the pads on leads 164, 154, 162 for the leads from die 190. In the presently preferred practice of the invention, the die leads are attached to the respective pads for the conductive strips by suitable weldment, as for example, by ultrasonic welding; however, other techniques may be employed such as soldering.

After adhesive attachment to the board over the respective sensing orifices 152, 153 the dies 188, 190 and their leads are potted over with suitable resilient hydraulic fluid resisting potting material, as for example, an elastomeric material such as a fluorosilicone potting material. A retaining wall is employed around each of the dies 188, 190 in the form of rings 192, 194 respectively for retaining the fluorosilicone elastomeric potting compound over the die and attachment leads and tabs.

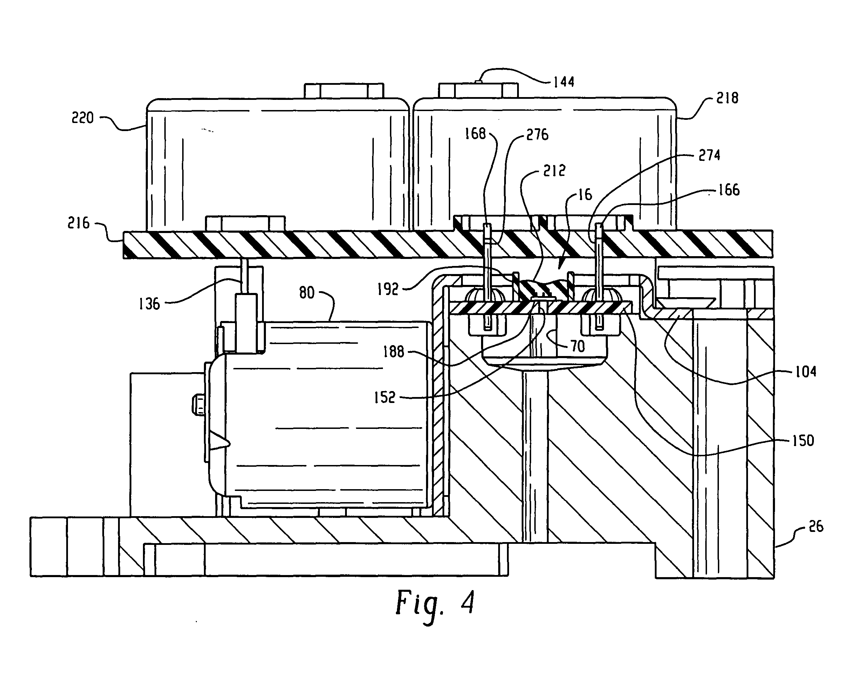

The elastomeric potting compound disposed over the dies is denoted respectively for sensors 16 and 18 in FIGS. 3 and 4 by reference numerals 212, 214.

The sensor assembly 12 is retained on the manifold 26 by fasteners 196 through 202 received through apertures in the circuit board and threadedly engaging bores in the top of the manifold as shown in FIG. 2b. Similarly sensor assembly 14 is retained by fasteners 204 through 210 received through apertures in the board and threadedly engaging bores 174 in the top surface of the manifold.

Referring to FIGS. 1, 2a, 3 and 4, an electrical lead frame 216 is received over the sensor assemblies and manifold and has covers 218, 220 formed integrally therein for covering the solenoid valves 56, 58 respectively.

Lead frame 216 has a receptacle shell 222 formed on one end thereof which has a plurality of electrical terminals, six of which are shown and denoted by reference numerals 224 through 232, it being understood that a second row of terminal connectors is provided therein but are not visible in the view of FIG. 2a. The covers 218, 220 each have slots formed in the upper surface thereof which expose the edges of electrical strips (not shown) embedded in the lead frame and which connect to one of the terminal strips such as 224 through 232. Cover 218 has slot 234, 236 which have terminals 142, 144 from solenoid 56 received therein as shown in FIG. 1 for making electrical connection therewith. Similarly, cover 220 has slots 238, 240 formed therein with electrical terminals 146, 148 from solenoid 58 received respectively therethrough and making electrical connection thereto.

Lead frame 216 has a separate set of slots disposed in spaced pairs and denoted by reference numerals 242 through 252 and having received therein terminals 176 through 186 respectively providing electrical connection for the sensors 20, 22, 24 as shown in FIG. 1. It will be understood that slots 244 through 252 have exposed edges of conductors embedded in the lead frame 216 which are unshown in FIG. 2a but which are also connected to certain ones of the connector terminals such as 224 through 232.

Lead frame 216 has another set of four pairs of slots denoted by reference numerals 254 through 268 which have therein exposed edges of conductor strips (not shown) and which have received therein the connector terminals 118 through 132 respectively for the solenoids 72, 74, 76, 78. Thus the slots 254 through 268 provide electrical connection through strips (not shown) in the lead frame which connect the aforesaid solenoids to certain ones of the terminals such as 224 through 232 in connector 222.

An additional set of two pairs of slots are formed in the lead frame 216 between the covers 218, 220 and the receptacle 222 as denoted by reference numerals 270 through 276 and which have received therein respectively connector terminals 166 through 172 for the sensors 16, 18, with the connection shown in FIG. 1. It will be understood that the slots 270 through 276 have exposed therein edges of electrical strips (not shown) which are embedded in the lead frame 216 and which are connected to ones of the terminal strips in the receptacle shell 222.

An additional set of two pairs of slots are disposed between cover 220 and connector shell 222 on the lead frame 216, which slots are denoted by reference numerals 278 through 284 and which have received therein connector terminals 134 through 140 respectively for electrically connecting to solenoids 80, 82. It will be understood that slots 278 through 284 expose therein edges of electrical conductive strips (not shown) which are embedded in the lead frame 216 and which connect to ones of the terminals in receptacle shell 222.

In operation, each of the solenoid valves 56, 58, 72,74, 76, 78 and 80, 82 are preferably of the three port pressure bleed type wherein a moveable valve member bleeds fluid pressure from the inlet to an exhaust port, thereby controlling the pressure at an intermediate pressure control port which provides the desired control pressure to the individual control pressure outlets such as ports 40 through 46, 48, 50 and 60. The solenoids are sealed in their respective cavities by O-rings disposed about the body thereof for isolating the control pressure port from the inlet and exhaust ports in a manner well known in the art and which will not be described herein in detail. In the present practice of the invention, in one application for an electro-hydraulic manifold assembly employed in controlling the shifting of a motor vehicle automatic transmission, solenoid 56 may operate as an arming solenoid for the other solenoids 72, 74, 76, 78 and 80, 82. In such an application, solenoid 56 may be connected to the internal passages so as to act as an on/off valve for the entire assembly. It will be understood that the supply ports for the manifold may comprise channels (not shown) formed in the undersurface of the manifold for attachment to a ported distribution plate or deck connected fluidically to the pump pressure circuit in the automatic transmission.

The present invention thus provides a unique electro-hydraulic manifold having electrically operated valves for controlling the pressure supplied to individual control ports with integrally mounted pressure sensors for providing an electrical signal in real time indicative of the pressure supplied to the control port and which manifold assembly and pressure sensors are sufficiently compact and robust to be mounted within the transmission and exposed to the hydraulic fluid therein.

Although the invention has hereinabove been described with respect to the illustrated embodiments, it will be understood that the invention is capable of modification and variation and is limited only by the following claims.

## Claims

1. A method of installing a plurality of pressure transducers on a fluid pressure manifold (26) having a plurality of fluid pressure outlet ports (40-50) each controlled by an electrically operated valve comprising:
(a) forming a plurality of sensing ports (62-70) on a common surface of said manifold (26) with each sensing port communicating with one of said pressure outlets;
(b) providing a circuit board (174, 150) having a plurality of conductive strips (154-164) and forming a plurality of sensing orifices (152, 153) therethrough each corresponding to one of said pressure sensing ports and disposing a plurality of connector terminals (166-172, 176-186) on the board with each terminal associated with one of said sensing orifices and connecting each of said connector terminals to one of said strips;
(c) providing a plurality of dies (188, 190) each having a pressure sensitive variable impedance region and disposing said region of one of said dies over each of said sensing orifices;
(d) connecting each of said dies to a pair of said strips;
(e) disposing said board on said common surface and aligning each of said orifices with one of said sensing ports; and, securing said board to said manifold.

2. The method defined in claim 1, wherein said step of connecting each of said dies includes weldment.

3. The method defined in claim 1, wherein said step of connecting each of said dies includes ultrasonic weldment.

4. The method defined in claim 1, wherein said step of connecting includes potting (212, 214) over said dies.

5. The method defined in claim 4, wherein said step of potting includes potting over said dies with elastomeric material.

6. The method defined in claim 4, wherein said step of potting includes surrounding each of the dies with a containment wall (192, 194).

7. The method defined in claim 4, wherein said step of potting includes potting with silicone material.

8. The method defined in claim 1, further comprising inserting said terminals in bayonet connection with an electrical lead frame (216).

9. A method of installing a plurality of pressure transducers on a fluid pressure manifold having a plurality of fluid pressure outlet ports (40-50) each controlled by an electrically operated valve comprising:
(a) forming a plurality of sensing ports (62-70) on a common surface of said manifold (26) with each sensing port communicating with one of said pressure outlets (40-50);
(b) providing a circuit board (174, 150) having a plurality of conductive strips (154-164) and forming a plurality of sensing orifices (152, 153) therethrough each corresponding to one of said pressure sensing ports and disposing a plurality of connector terminals (166-172, 176-186) on the board with each terminal associated with one of said sensing orifices and connecting each of said connector terminals to one of said strips;
(c) providing a plurality of pressure transducers (188, 190, 16-24) each having electrical connections and mounting one of said transducers over each of said sensing orifices;
(d) connecting each of said transducers electrical connections to a pair of said strips and potting over each of said transducers;
(e) disposing said board on said common surface and aligning each of said orifices with one of said sensing ports; and, securing said board to said manifold.

10. An electro-hydraulic manifold assembly comprising:
(a) a manifold block (26) having an inlet and a plurality of outlets (40-50) with each outlet having a valving chamber (28-38, 52, 54) communicating with the inlet and a pressure sensing port (62-70);
(b) an electrically operated valve (72-82) disposed in each valving chamber and operable upon energization and de-energization for controlling flow from the inlet to the respective outlet associated with the chamber;
(c) a circuit board (150, 174) having a plurality of sensing orifices (152, 153) therethrough each corresponding with one of said pressure sensing ports and a plurality of conductive strips (154-164) with a plurality of connector terminals (166-172, 176-186) each associated respectively with one of the sensing orifices and connected to one of said strips;
(d) a plurality of pressure transducers (188, 190, 16-24) disposed on said board with each transducer mounted respectively over one of said sensing orifices and connected to one of said strips; and,
(e) means securing said board on said manifold with each of said sensing orifices disposed for communicating with one of said sensing ports.

11. The assembly defined in claim 10, wherein each of said pressure transducers comprises a die (188, 190) with a pressure sensitive variable impedance region disposed over the orifice.

12. The assembly defined in claim 11, wherein said variable impedance region includes a variable resistance.

13. The assembly defined in claim 11, wherein each of said dies has potting compound (212, 214) disposed thereover.

14. The assembly defined in claim 11, wherein each of said dies has a containment wall (192, 194) disposed therearound and potting compound thereover.

15. The assembly defined in claim 10, further comprising a common lead (216) frame electrically connected to each of said valves and each of said connector terminals, wherein said lead frame is attached to said manifold.

16. The assembly defined in claim 15, wherein said lead frame is connected by bayonet type connection in a common direction with said valve and said connector terminals.
